# EUROPÄISCHE PATENTSCHRIFT

(11) **EP 0 417 401 B1**
(45) Veröffentlichungstag und Bekanntmachung des Hinweises auf die Patenterteilung: **09.08.1995**
(21) Anmeldenummer: 90110344.0
(22) Anmeldetag: 31.05.1990
(51) Int. Cl.: B01D 33/80, B02C 18/00

(54) **Verfahren und Vorrichtung zum Entsorgen eines verbrauchten Filterbandes**
Method and device for the disposal of a used filtering band
Méthode et dispositif de disposition d'une bande de filtre usée

(30) Priorität: 16.08.1989 DE 3926995
(43) Veröffentlichungstag der Anmeldung: 20.03.1991
(73) Patentinhaber: FILTERWERK MANN & HUMMEL GMBH, D-71631 Ludwigsburg (DE)
(72) Erfinder: Creten, André, B-3855 Borgloon (BE); Heck, Alfred, B-4701 Eupen (BE); Bühl, Karl Heinz, D-5100 Aachen (DE)
(74) Vertreter: Voth, Gerhard, Dipl.-Ing.

(56) Entgegenhaltungen:
- EP-A- 0 155 466
- DE-A- 2 641 370
- DE-A- 2 717 522
- DE-A- 3 216 092
- DE-A- 3 612 431
- DE-B- 2 700 942
- DE-U- 8 814 584
- US-A- 2 720 974
- US-A- 3 651 946

## Beschreibung

Die Erfindung betrifft ein Verfahren und eine Vorrichtung zum Entsorgen eines nach Durchgang durch eine Bandfilteranlage verbrauchten Filterbandes gemäß dem Oberbegriff des Hauptanspruchs.

Bandfilteranlagen eignen sich insbesondere zur Reinigung von Bearbeitungsflüssigkeiten (Öl oder ölhaltige Emulsionen) in der metallverarbeitenden Industrie. Die verschmutzte Bearbeitungsflüssigkeit wird von den Bearbeitungsmaschinen zu dem Einlaufrohr der Bandfilteranlage geführt. Von dort gelangt sie in den Filter, in dem das Filterband läuft. Die Bearbeitungsflüssigkeit wird über ein Pumpensystem durch das Filterband gefördert und die Reinflüssigkeit den Bearbeitungsmaschinen wieder zugeführt.

Das Filterband, welches beispielsweise aus einem Faservlies besteht, wird mit den Schlammablagerungen über eine Umlenkung aus der Bandfilteranlage herausgeführt. Der anhaftende Filterkuchen wird mittels Abstreifer grob entfernt und das noch mit Restschmutz behaftete Filterband durch eine Haspeleinrichtung zu einer Rolle aufgewickelt bzw. mittels Abzugswalzen einem Container zugeführt. Zur Entsorgung des Filterbandes wird der aufgehaspelte und stark mit Schmutz und Öl behaftete Wickel aus der Haspeleinrichtung ausgeklinkt. Der Wickel kann entnommen und in einem Container oder einem Wagen einer Sammelstelle zugeführt werden.

Die an dem Filterband noch anhaftenden Schmutzteile, beispielsweise auch Spänereste aus Stahl, Aluminium oder Grauguß stellen eine Beeinträchtigung der Handhabung beim Entsorgen des Filterbandes für das bedienende Personal dar. Es wurde deshalb schon in dem DE-GM 88 14 584 eine Einrichtung beschrieben, welche das Filterband nach Durchgang durch den Filterbehälter längs aufschneidet. Hierzu ist ein rotierender Scheibenfräser vorgesehen, der nach Art eines Kreissägeblattes mit einer Umfangsverzahnung versehen ist, und welcher während des Aufwickeln des Filterbandes das Filterband in zwei oder mehrere Teilbänder zerschneidet.

Ein wesentlicher Nachteil des Längsschneidens des Filterbandes ist jedoch darin zu sehen, daß das Filterband regelmäßig noch mit Schmutzteilen, wie vor allem Schneid- und Schleifspänen aus den Bearbeitungsflüssigkeiten behaftet ist, die eine rasche Abnutzung des Scheibenfräsers bewirkt und daher ein häufiges Auswechseln desselben erforderlich macht.

Insbesondere wenn Faservliese verwendet werden, die mit abrasiven Schmutzstoffen, wie vor allem Schleifstoffe Schneidspäne und dergleichen behaftet sind, ist ein häufiges Auswechseln des Scheibenfräsers erforderlich. Ein weiterer Nachteil dieser Einrichtung ist darin zu sehen, daß die auseinandergetrennten Teilrollen zwar leichter zu handhaben sind, diese jedoch weiterhin vom bedienenden Personal von dem Filterbehälter abgenommen und einem Container oder einem sonstigen Transportbehälter zugeführt werden müssen. Das bediendende Personal wird also weiterhin mit der schmutzigen und zeitaufwendigen Entsorgung der Filterbänder belastet. Außerdem besteht beider bekannten Vorrichtung der Nachteil, daß der Fräser schlecht zugänglich und daher die Instandhaltung nur unter schwierigen Umständen durchzuführen ist.

Die Aufgabe der Erfindung besteht daher in der Schaffung eines Verfahrens und einer Einrichtung, mit welchem die Berührung des verbrauchten Filterbandes durch das Bedienungspersonal während des Entsorgungsvorgangs vermieden wird, wobei die Einrichtung keine stark verschleißbehafteten Teile enthalten soll.

Diese Aufgabe wird ausgehend von dem Oberbegriff des Hauptanspruchs durch die Merkmale dessen Kennzeichens gelöst.

Ein Vorteil dieser Erfindung ist darin zu sehen, daß bei einem solchen Verfahren die Einrichtung nur wenig Platz beansprucht und individuell eingesetzt werden kann. Da diese Einrichtung eigenständig ist und nicht fest mit der Bandfilteranlage verbunden ist, besteht die Möglichkeit, den Einsatzort der Einrichtung je nach Bedarf zu wählen bzw. diese Einrichtung auch nachträglich an vorhandenen Bandfilteranlagen zu verwenden. Es hat sich gezeigt, daß für die Entsorgung des Filterbandes ein Zerreißen in sehr kleine Teilstücke besonders zweckmäßig ist, da ein solches Material besser entsorgt werden kann als ein zu einer festen Rolle aufgewickeltes Filterband.

Ein weiterer Vorteil der Erfindung ist darin zu sehen, daß eine Reißwalze eine wesentlich höhere Standzeit aufweist als beispielsweise ein Scheibenfräser.

Besonders vorteilhaft ist es die gesamte Einrichtung in einem kompakten Gehäuse anzuordnen. Zur Vermeidung von Gefahren für die Bedien-Person weist der Einlauftrichter an dem Gehäuse ein oder mehrere Sicherungselemente, beispielsweise Sicherungsstäbe oder ähnliches auf. Der Auslaß der Einrichtung wird zweckmäßigerweise dadurch abgesichert, daß die gesamte Einrichtung auf einer Rahmenkonstruktion aufgesetzt wird und damit ein Zugriff auf die Reißwalze während des Betriebs nicht möglich ist.

Die Erfindung wird nachfolgend aufgrund eines Ausführungsbeispiels näher erläutert. Es zeigen:
- Figur 1: die Ausgangsseite einer Bandfilteranlage mit den Entsorgungseinrichtungen
- Figur 2: eine Einrichtung zum Zerkleinern des Filterbandes in einer Seitenansicht
- Figur 3: die in Figur 2 dargestellte Einrichtung in Draufsicht.

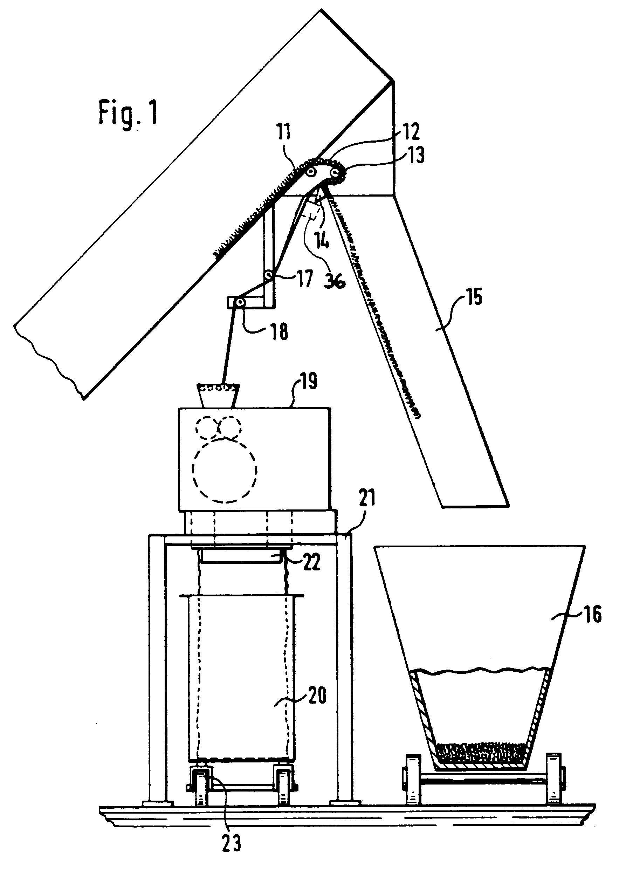

Eine Bandfilteranlage ist beispielsweise in dem DE-GM 88 14 584 beschrieben und braucht hier nicht näher erläutert zu werden. In der Figur 1 ist die Ausgangsseite einer solchen Bandfilteranlage dargestellt. Auf einem aufsteigenden Austragerampe 10 läuft ein Filterband 11 und transportiert den entfeuchteten Schlamm (Filterkuchen 12) aus der Anlage heraus. Das Filterband 11 läuft am Ende des Austragehalses 10 über eine Umlenkrolle 13 und wird anschließend an einem Abstreifer 14 vorbeigeführt, an welchem der Filterkuchen 12 von dem Filterband 11 abgenommen und über eine Schütte 15 einem Transportwagen 16 zugeführt wird. Das Filterband 11 läuft anschließend zu einer Zerreißeinrichtung 19, welche das Filterband zerkleinert und einem Behälter 20 zuführt. Die Zerreißeinrichtung 19 befindet sich oberhalb des Behälters auf einem Tragegestell 21. An dem Tragegestell 21 ist unmittelbar unterhalb der Zerreißeinrichtung 19 eine Haltevorrichtung 22 vorgesehen, an welche der Behälter 20, der beispielsweise ein wasserdichter Auffangsack ist, befestigt wird. Der Behälter 20 kann zum leichteren Transport in einem weiteren Transportwagen 23 eingehängt sein. Befindet sich ein Behälter 20 an der Haltevorrichtung 22, dann ist ein Eingriff in die Zerreißeinrichtung durch die Auslaßöffnung nicht möglich und damit die notwendige Sicherheit gegenüber unzulässigen manuellen Eingriffen gewährleistet. Zur Kontrolle des Bandlaufes wird das Filterband 11 über zwei Rollen 17, 18 geführt, wobei eine Rolle mit einem Sensor ausgerüstet ist, welcher die Drehbewegung erfaßt und bei Stillstand ein Alarmsignal abgibt.

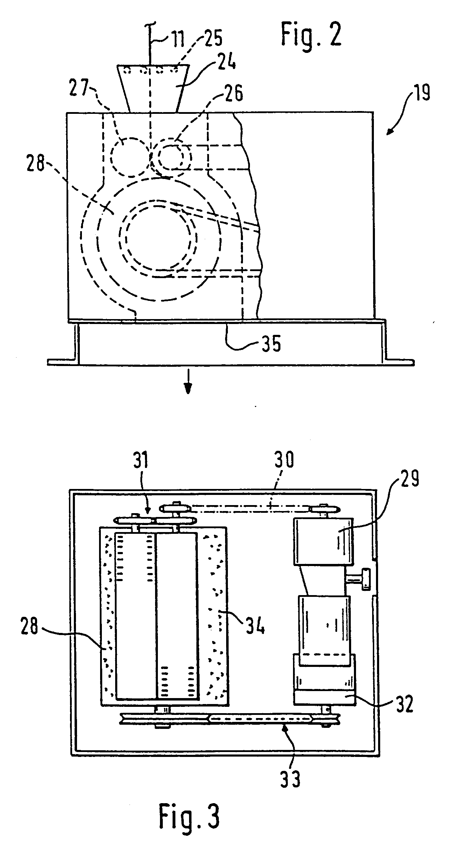

In Figur 2 ist eine Zerreißeinrichtung 19 näher erläutert. Über einen Einlauftrichter 24 wird das Filterband 11 zugeführt. Dieser Einlauftrichter ist mit parallel zum Filterband angeordneten Metallstäben 25 versehen, welche ein unbeabsichtigtes Hineingreifen in die Zerreißeinrichtung 19 wirksam verhindern.

Das Filterband 11 wird über zwei Führungsrollen 26, 27 einer Reißwalze 28 zugeführt. Die Führungsrollen bewegen sich synchron oder schneller zu der Transportgeschwindigkeit des Filterbandes. Die Transportbewegung erfolgt, wie in Figur 3 gezeigt, mittels eines Elektromotors 29, der über eine Antriebskette 30 und über das Zahnräderpaar 31 auf die Führungsrollen 26, 27 einwirkt und entsprechend dem Arbeitstakt der Bandfilteranlage gesteuert wird. Unterhalb der Führungsrollen befindet sich die Reißwalze 28. Diese wird, wie ebenfalls in Figur 3 dargestellt, mit einem Elektromotor 32 über einen Riementrieb 33 angetrieben. Die Drehzahl dieser Reißwalze 28 beträgt beispielsweise 2000 Umdrehungen pro Minute. Auf dieser Reißwalze befinden sich stiftförmige und im wesentlichen radial nach außen gerichtete Zähne 34, welche das Filterband erfassen und aufgrund der hohen Drehzahl auf Fasergröße zerreißen. Das derart zerrissene Band fällt durch die Ausgangsöffnung in den in Figur 1 gezeigten Behälter 20.

Wie schon erwähnt, wird durch diese Einrichtung ein direkter Kontakt des Bedienungspersonals mit dem verschmutzten Filterband vermieden. Außerdem ist die Entsorgung des Filterbandes, welches bei großen Anlagen eine Breite bis zu 2,5 Metern aufweist, in der durch die Einrichtung aufbereiteten Form wesentlich einfacher und für eine anschließende Entsorgung besser geeignet.

Insbesondere bei einem breiten Filterband ist es aufwendig, auch eine entsprechend breite Reißwalze vorzusehen. Die Anwendung einer Reißwalze mit einer geringeren Länge ist jedoch ohne weiteres möglich, wenn der Einlauftrichter in die Zerreißeinrichtung ebenfalls nur eine geringere Breite aufweist und damit das Filterband sich entsprechend dieser Breite einrollt. Das Einrollen des Filterbandes geschieht ohne zusätzliche Hilfsvorrichtungen. Um ein Einrollen oder eine Faltenbildung schon am Abstreifer 14 zu vermeiden, kann in diesem Fall vorgesehen sein, das Filterband über eine konkav über die Breite des Filterbandes gewölbte Fläche bzw. Schiene zu führen. Eine solche Schiene 36 ist in der Figur gestrichelt dargestellt.

## Patentansprüche

1. Verfahren zum Entsorgen eines nach Durchlauf durch eine Sandfilteranlage verbrauchten Filterbandes, insbesondere eines Faservliesfilterbandes, dadurch gekennzeichnet, daß das Filterband (11) am Austritt aus der Anlage einer Einrichtung (19) zum Zerkleinern zugeführt wird, wobei die Einrichtung einen Einlauf (24) für das Filterband (11) aufweist und unterhalb des Einlaufs eine Reißwalze (28) angeordnet ist, welche das Filterband (11) insbesondere bis auf Fasergröße zerreißt und das Fasermaterial anschließend in einen Auffangbehälter (20) gelangt.

2. Verfahren nach Anspruch 1 dadurch gekennzeichnet, daß der Einlauf aus zwei Führungsrollen (26, 27) gebildet wird zwischen denen das Filterband (11) eingeführt wird.

3. Bandfilteranlage mit einer Einrichtung zum Entsorgen eines nach Durchlauf durch die Bandfilteranlage verbrauchten Filterbandes insbesondere eines Faservliesbandes, dadurch gekennzeichnet, daß die Einrichtung (19) am Austritt der Bandfilteranlage vorgesehen ist, welche das Filterband (11) insbesondere bis auf Fasergröße mit einer Reißwalze (28) zerreißt und wobei diese Einrichtung (19) in einem kompakten Gehäuse angeordnet ist, welche einen Einlauftrichter (24) für das Filterband (11) mit Griffschutzelementen (25) aufweist und wobei das Gehäuse derart abgesichert ist, daß ein Eingreifen in das Gerät während des Betriebs nicht möglich ist.

## Claims

1. Method of disposing of a filter strip, more especially a filter strip formed from non-woven fabric, which has become worn-out after passing through a belt-type filtering system, characterised in that the filter strip (11) at the outlet from the system is supplied to an apparatus (19) for comminution, the apparatus having an inlet (24) for the filter strip (11), and a tearing roller (28) being disposed beneath the inlet, which roller tears the filter strip (11) more especially down to fibre size, and the fibrous material subsequently passes into a collecting vessel (20).

2. Method according to claim 1, characterised in that the inlet is formed from two guide rollers (26, 27), between which the filter strip (11) is introduced.

3. Belt-type filtering system, having an apparatus for disposing of a filter strip, more especially a strip formed from non-woven fabric, which has become worn-out after passing through the belt-type filtering system, characterised in that the apparatus (19) is provided at the outlet of the belt-type filtering system and tears the filter strip (11) more especially down to fibre size with a tearing roller (28), this apparatus (19) being disposed in a compact housing and having a feed hopper (24) for the filter strip (11) provided with protection means (25), and the housing being protected in such a manner that it is not possible to intervene in the appliance during the operation.

## Revendications

1. Procédé pour se débarrasser, après son passage dans une installation de filtrage en bande, d'une bande filtrante utilisée, notamment d'une bande en non-tissé, caractérisé en ce que la bande filtrante (11), à la sortie de l'installation, est amenée à un dispositif (19) pour la réduire en petits morceaux, ce dispositif comportant une entrée (24) pour la bande filtrante (11), tandis qu'au-dessous de cette entrée est disposé un cylindre briseur (28) qui déchiquette la bande filtrante (11), notamment jusqu'à la dimension des fibres, et le matériau en fibres arrive ensuite dans un récipient collecteur (20).

2. Procédé selon la revendication 1, caractérisé en ce que l'entrée est formée de deux galets de guidage (26, 27) entre lesquels est engagée la bande filtrante (11).

3. Installation de filtrage en bande avec un dispositif pour se débarrasser, après son passage dans l'installation de filtrage en bande, d'une bande filtrante utilisée, notamment d'une bande en non-tissé, caractérisé en ce que ce dispositif (19) est prévu à la sortie de l'installation de filtrage en bande, en ce qu'il déchiquette la bande filtrante (11) avec un cylindre briseur (28) notamment jusqu'à la dimension des fibres, tandis que ce dispositif (19) est installé dans un carter compact, qui comporte un entonnoir d'entrée (24) pour la bande filtrante (11) avec des éléments (25) en protégeant l'accès, et le carter est protégé de façon à interdire un accès dans l'appareil pendant son fonctionnement.
